# EUROPÄISCHE PATENTANMELDUNG

(11) **EP 1 205 447 A2**
(43) Veröffentlichungstag der Anmeldung: **15.05.2002**
(21) Anmeldenummer: 01125779.7
(22) Anmeldetag: 26.10.2001
(51) Int. Cl.: C03B 37/014, C03B 19/14

(54) **Verfahren und Vorrichtung zur Herstellung eines SiO2-Glas-Rohlings**

(30) Priorität: 08.11.2000 DE 10055362
(71) Anmelder: Heraeus Tenevo AG, 63450 Hanau (DE)
(72) Erfinder: Heinz, Fabian, 63762 Grossostheim (DE)
(74) Vertreter: Staudt, Armin Walter

(57) **Zusammenfassung**

Bei einem bekannten Verfahren für die Herstellung eines SiO₂-Rohlings werden SiO₂-Partikel in einer einem Abscheidebrenner zugeordneten Brennerflamme gebildet und unter Einwirkung eines elektrischen Feldes auf einer Ablagerungsfläche eines um seine Längsachse rotierenden Trägers abgeschieden, wobei der mindestens eine Abscheidebrenner in einem vorgegebenen Bewegungsablauf, entlang des sich bildenden Rohlings zwischen Wendepunkten hin- und herbewegt wird. Um hiervon ausgehend Rohlinge mit vorgegebener, insbesondere axial homogener Dichte- und Masserverteilung zu erhalten, wird erfindungsgemäß vorgeschlagen, dass die geometrische Form der Brennerflamme in Abhängigkeit von der Position des Abscheidebrenners beim Bewegungsablauf durch das elektrische Feld verändert wird. Eine zur Durchführung des Verfahrens geeignete Vorrichtung umfasst einen um seine Längsachse rotierbaren Träger, einen Abscheidebrenner zur Erzeugung von SiO₂-Partikeln in einer Brennerflamme, eine Antriebsvorrichtung, mittels der der Abscheidebrenner entlang des Trägers hin- und herbewegbar ist, und ein Elektrodenpaar, das mit einer Spannungsquelle verbunden, zur Erzeugung eines im Bereich der Brennerflamme wirkenden elektrischen Feldes und das entlang der Bewegungsstrecke des Abscheidebrenners gesehen örtlich inhomogen ist oder zeitlich - während des Bewegungsablaufs des Abscheidebrenners - in Abhängigkeit von der Position des Abscheidebrenners veränderbar ist.

## Beschreibung

Die vorliegende Erfindung betrifft ein Verfahren für die Herstellung eines SiO₂-Rohlings, indem SiO₂-Partikel in einer einem Abscheidebrenner zugeordneten Brennerflamme gebildet und unter Einwirkung eines elektrischen Feldes auf einem um seine Längsachse rotierenden Trägers abgeschieden werden, wobei der mindestens eine Abscheidebrenner in einem vorgegebenen Bewegungsablauf, entlang des sich bildenden Rohlings zwischen Wendepunkten hin- und herbewegt wird.

Weiterhin betrifft die Erfindung eine Vorrichtung zur Herstellung eines SiO₂-Rohlings, mit einem um seine Längsachse rotierbaren Träger, mit mindestens einem Abscheidebrenner zur Erzeugung von SiO₂-Partikeln in einer dem Abscheidebrenner zugeordneten Brennerflamme, mit einer Antriebsvorrichtung, mittels der der Abscheidebrenner entlang des Trägers in einem vorgegebenen Bewegungsablauf entlang des sich bildenden Rohlings über eine Bewegungsstrecke zwischen Wendepunkten hin- und herbewegbar ist, und mit einem Elektrodenpaar, das mit einer Spannungsquelle verbunden, zur Erzeugung eines im Bereich der Brennerflamme wirkenden elektrischen Feldes dient.

Ein Verfahren und eine Vorrichtung der genannten Gattung sind aus der DE-A1 196 29 170 bekannt. Zur Herstellung eines porösen, zylinderförmigen SiO₂-Körpers (im folgenden auch als "Sootkörper" bezeichnet), werden in der Knallgasflamme mehrerer Hydrolyse-Brenner SiO₂-Partikel erzeugt und auf einem waagerecht orientierten, um seine Längsachse rotierenden Trägerrohr SiO₂-Partikel schichtweise abgeschieden. Die Brenner sind mit äquidistanten Abstand von etwa 15 cm zueinander auf einem parallel zur Längsachse des Trägerrohrs verlaufenden Brennerblock montiert. Der Brennerblock wird entlang der sich bildenden porösen, zylinderförmigen Vorform zwischen einem linken und einem rechten Wendepunkt mittels einer regelbaren Verschiebeeinrichtung hin- und herbewegt, wobei die Amplitude dieser Translationsbewegung des Brennerblocks kleiner ist als die Länge der Vorform.

Zur Erhöhung der Abscheiderate der SiO₂-Partikel wird zwischen dem Trägerrohr und den Hydrolyse-Brennern ein elektrisches Feld angelegt. Hierzu ist eine Elektrode in der Innenbohrung des Trägerrohres vorgesehen, die zweite Elektrode (Außenelektrode) wird durch ein langgestrecktes metallisches Gitter gebildet, das entweder mit dem Brennerblock verbunden ist oder das zwischen den Hydrolyse-Brennern und dem Trägerrohr angeordnet ist. Zwischen den beiden Elektroden wird mittels einer elektrischen Gleichspannungsquelle eine Potentialdifferenz von einigen 10 kV aufrechterhalten. Das elektrische Feld erzeugt eine elektrostatische Aufladung der dielektrischen SiO₂-Partikel, die dadurch in Richtung auf den Sootkörper beschleunigt werden. Daraus resultiert eine Verbesserung der Abscheideeffizienz gegenüber dem üblichen Verfahren ohne diese elektrostatische Aufladung.

Bei der Herstellung derartiger Sootkörper als Ausgangsmaterial für Vorformen für optische Fasern stellt sich grundsätzlich das Problem der Homogenität des Sootkörpers. Um möglichst gleichmäßige Abscheidebedingungen und einen axial homogenen Sootkörper zu erhalten, werden bei dem bekannten Verfahren mittels der Außenelektrode Ladungspunkte erzeugt, die die Raumform des Sootkörpers nachbilden. Jedoch lassen sich dadurch lokale Überhitzungen des Sootkörpers durch zweimaliges rasch aufeinander folgendes Aufheizen bei der Umkehr der Bewegungsrichtung im Bereich der Wendepunkte der Brennerbewegung nicht vermeiden. Dieser thermische Effekt macht sich insbesondere beim Einsatz eines Brennerblocks bemerkbar, denn durch die Vielzahl der Brennerwendepunkte kann es über die gesamte Rohlingoberfläche zu lokalen Überhitzungen und dadurch zu axialen Dichteschwankungen im Rohling kommen. Dichteschwankungen bewirken Bereiche unterschiedlicher Reaktivität im Rohling, die sich insbesondere bei nachfolgenden chemischen Reaktionen bei der Weiterverarbeitung zu einer Vorform bemerkbar machen und beispielsweise nach dem Sintern Inhomogenitäten hinterlassen könnten.

Um derartige lokale Dichteschwankungen zu vermeiden, wird in der EP-A1 476 218 vorgeschlagen, bei jedem Brennerdurchgang sowohl die rechten, als auch die linken Wendepunkte um einige Millimeter zu verlagern. Dadurch werden die an den Wendepunkten entstehenden lokalen Dichteschwankungen zwar gleichmäßiger in der Vorform verteilt, sie werden jedoch nicht vermieden. Die örtliche Verteilung der Wendepunkte erfordert darüberhinaus einen hohen apparativen und regelungstechnischen Aufwand.

Daher wird in der DE-A1 196 28 958 ein anderes Verfahren vorgeschlagen, bei dem eine Überhitzung der Vorform in den Bereichen um die Wendepunkte verhindert oder verringert wird, indem in diesen Bereichen die Umfangsgeschwindigkeit der sich bildenden Vorform erhöht, die Flammentemperatur der Abscheidebrenner gesenkt, oder der Abstand der Abscheidebrenner von die Vorformoberfläche vergrößert wird. Mittels jeder dieser Maßnahmen oder mittels einer Kombination der Maßnahmen kann eine Temperaturerhöhung der Vorformoberfläche im Bereich der Wendepunkte ganz oder teilweise kompensiert werden, so dass die Vorform über ihre gesamte Länge mit einer zeitlich und räumlich möglichst gleich hohen Heizleistung beaufschlagt wird. Axiale Dichtegradienten in der Vorform lassen sich damit weitgehend vermeiden. Diese Maßnahmen verlangen jedoch eine zeitliche Veränderung von Gasflüssen, Abständen oder Relativgeschwindigkeiten im Bereich der Wendepunkte, was unerwünschte Änderungen der Abscheiderate zur Folge haben kann.

Der Erfindung liegt die Aufgabe zugrunde, ein Verfahren anzugeben, mittels dem Rohlinge mit vorgegebener, insbesondere axial homogener Dichte- und Masserverteilung, herstellbar sind, sowie eine zur Durchführung des Verfahrens geeignete, einfache Vorrichtung bereitzustellen.

Hinsichtlich des Verfahrens wird diese Aufgabe ausgehend von dem eingangs genannten Verfahren erfindungsgemäß dadurch gelöst, dass die geometrische Form der Brennerflamme in Abhängigkeit von der Position des Abscheidebrenners beim Bewegungsablauf durch das elektrische Feld verändert wird.

Verfolgt man die Oberflächentemperatur des Rohlings im Bereich des Auftreffpunkts der Brennerflamme bei der Bewegung des Abscheidebrenners von dem einen Wendepunkt zum anderen Wendepunkt (hier als "Bewegungsablauf" bezeichnet), so stellt man fest, dass trotz konstanter Temperatur der Brennerflamme die Oberflächentemperatur im Normalfall nicht konstant, sondern lokal unterschiedlich und darüberhinaus abhängig von der Bewegungsrichtung des Abscheidebrenners ist. Jeder Position des Abscheidebrenners bei seiner Hinbewegung zu einem der Wendepunkte und jeder Position bei seiner Hinbewegung zu dem anderen Wendepunkt kann eine Oberflächentemperatur zugeordnet werden, durch deren Aneinanderreihung sich ein für den Abscheidebrenner und die konkreten Abscheideparameter charakteristisches Temperaturprofil ergibt. Dieses Temperaturprofil hängt unter anderem von der Temperatur und von der Geometrie der Brennerflamme ab.

Beim erfindungsgemäßen Verfahren wird ein elektrisches Feld erzeugt, das auf die geometrische Form der Brennerflamme veränderbar einwirkt, entweder durch Änderung der im Bereich der Brennerflamme wirksamen Feldstärke, oder durch Maßnahmen, welche die Richtung der Feldlinien im Bereich der Brennerflamme verändern. Eine Veränderung der auf die Brennerflamme einwirkenden Feldstärke oder eine Änderung der Richtung der Feldlinien führt zu einer Änderung der Brennerflammen-Geometrie.

Diese Wirkung des elektrischen Feldes auf die Geometrie der Brennerflamme wird erfindungsgemäß dazu eingesetzt, das oben genannte, für einen Abscheidebrenner charakteristische Temperaturprofil zu modifizieren, indem die geometrische Form der Brennerflamme während des Bewegungsablaufs des Abscheidebrenners verändert wird. Beispielsweise können lokale Temperaturspitzen oder -senken eines Temperaturprofils kompensiert oder vermieden werden, indem die Breite der Brennerflamme durch die Wirkung des elektrischen Feldes entsprechend verringert oder vergrößert wird.

Die Einstellung des elektrischen Feldes erfolgt entweder in Abhängigkeit von der Position des Abscheidebrenners oder in Abhängigkeit von einer mit dem Bewegungsablauf des Abscheidebrenners korrelierbaren Messgröße, wie der Oberflächentemperatur, dem Volumen, der Masse oder dem Durchmesser des sich bildenden Rohlings. Bei einer Einstellung des elektrischen Feldes in Abhängigkeit von der Position des Abscheidebrenners wirkt bei einer vorgegebenen Position des Abscheidebrenners ein vorgegebenes elektrisches Feld auf die Brennerflamme ein, so dass eine definierte Einstellung der geometrischen Form der Brennerflamme während des Bewegungsablaufs des Abscheidebrenners ermöglicht wird.

Dies kann zum Beispiel dadurch erreicht werden, dass das elektrische Feld örtlich verschoben - zum Beispiel dem Bewegungsablauf der Abscheidebrenner folgend - und dabei zeitlich verändert wird. Oder auch dadurch, dass ein örtlich festes und zeitlich konstantes elektrisches Feld erzeugt wird, dessen Wirkung jedoch entlang der Bewegungsstrecke des Abscheidebrenners verschieden ist, so dass der Abscheidebrenner bei seinem Bewegungsablauf Bereiche unterschiedlicher Feldstärken oder wechselnder Richtungen der Feldlinien durchläuft. In jedem Fall erfährt die sich fortbewegende Brennerflamme eine "zeitliche Änderung der Wirkung des elektrischen Feldes", was im folgenden auch als "Feldänderung" bezeichnet wird.

Durch das erfindungsgemäße Verfahren kann die Brennerflamme und damit die Oberflächentemperatur allein durch die "Feldänderung" in weitem Rahmen variiert werden. Eine Änderungen von Strömungsgeschwindigkeiten oder Gasmengen, wie in der eingangs angeführten DE-A1 196 28 958 vorgeschlagen, ist nicht erforderlich. Damit sind Rohlinge mit vorgegebener Dichte- und Masserverteilung bei vergleichsweise geringem Steuerungs- und Regelungsaufwand herstellbar.

Die Wirkung des elektrischen Feldes auf die Brennerflamme beruht auf elektrisch geladenen Teilchen in der Brennerflamme. Dabei kann es sich um ionisierte Teilchen oder um elektrostatisch aufgeladene Teilchen handeln. lonisierte Teilchen sind vorwiegend im unteren Bereich der Brennerflamme konzentriert, so dass dort die Wirkung des elektrisches Feld größer ist als im oberen Bereich der Brennerflamme.

Anstelle des Abscheidebrenners kann in kinematischer Umkehr der Träger zwischen den Wendepunkten hin- und herbewegt werden. Unter einem SiO₂-Rohling wird ein Körper verstanden, der - abgesehen von Dotierstoffen - vollständig aus SiO₂ besteht. Als Abscheidebrenner kommen die bei Herstellung von synthetischem Quarzglas bekannten Brenner - insbesondere Knallgasbrenner und Plasmabrenner - in Betracht.

Eine "Feldänderung" wirkt sich auf die Ausdehnung der Brennerflamme in Richtung der Feldlinien aus. Die Feldlinien können in Richtung der Ausbreitungsrichtung der Brennerflamme verlaufen. Vorzugsweise verlaufen die Feldlinien jedoch innerhalb der Brennerflamme im wesentlichen senkrecht zur Ausbreitungsrichtung der Brennerflamme, so dass sich eine "Feldänderung" auf die laterale Ausdehnung der Brennerflamme auswirkt. Auf diese Weise lässt sich besonders einfach eine Verbreiterung oder eine Einengung der Brennerflamme erreichen. Gegenüber dem Zustand ohne elektrisches Feld lässt sich der maximale Flammendurchmesser um das Mehrfache aufweiten, wobei dies abhängig vom optimalen Arbeitsbereich der Brennerflamme ohne elektrisches Feld ist. Deutliche Effekte hinsichtlich der Massenverteilung und der Maximaltemperatur werden bei Flammenaufweitungen ab etwa 20% des anfänglichen Durchmessers (ohne elektrisches Feld) beobachtet. Eine Aufweitung um mehr als das 5-fache ist üblicherweise so weit außerhalb des optimalen Arbeitsbereichs der Brennerflamme, dass dies Einbußen hinsichtlich der Abscheiderate mit sich bringt.

Vorzugsweise wird die Breite der Brennerflamme in Abhängigkeit von der Position des Abscheidebrenners beim Bewegungsablauf verändert. Unter der Breite der Brennerflamme wird hier deren Abmessung senkrecht zur Hauptausbreitungsrichtung verstanden. Die Breite kann prinzipiell in jeder beliebigen Richtung verändert werden, vorzugsweise in Richtung der Zylinderachse der Ablagerungsfläche oder senkrecht dazu.

Als besonders günstig hat es sich erwiesen, die Breite der Brennerflamme - in Richtung der Träger-Längsachse gesehen - in Abhängigkeit von der Position des Abscheidebrenners beim Bewegungsablauf zu verändern. Die Feldlinien verlaufen dabei im wesentlichen parallel zur Träger-Längsachse.

Alternativ dazu wird die Breite der Brennerflamme - senkrecht zur Träger-Längsachse - in Abhängigkeit von der Position des Abscheidebrenners beim Bewegungsablauf verändert.. Die Feldlinien verlaufen dabei im wesentlichen senkrecht zur Träger-Längsachse. Diese Variante hat im Fall von Abscheidebrennern, die in Richtung der Zylinderachse benachbart sind, den Vorteil, dass sich die benachbarten Brennerflammen bei einer Verbreiterung gegenseitig nicht wesentlich beeinträchtigen.

Es wird eine Verfahrensweise bevorzugt, bei der die Breite der Brennerflamme mittels des elektrischen Feldes bei einer Position des Abscheidebrenners im Bereich der Wendepunkte verändert wird. Die "Feldänderung" erfolgt bei der Hinbewegung des Abscheidebrenners zum Wendepunkt kontinuierlich oder schrittweise, und sie wird bei der Wegbewegung vom Wendepunkt wieder rückgängig gemacht. Im Bereich der Wendepunkte weist das oben erwähnte charakteristische Temperaturprofil üblicherweise Maxima auf. Diese lassen sich bei dem erfindungsgemäßen Verfahren vermeiden, indem im Bereich der Wendepunkte die Brennerflamme verbreitert und damit die Oberflächentemperatur verringert wird. Neben einer Homogenisierung der Oberflächentemperatur hat die Verbreiterung der Brennerflamme den zusätzlichen Effekt, dass die SiO₂-Partikel breiter gestreut auf der Rohling-Oberfläche abgeschieden werden. Die Ausbildung von Dichteunterschieden wird dadurch vermieden oder vermindert. Für den Fall, dass im wesentlichen die Temperatur im Bereich der Wendepunkte kontrolliert werden soll, ohne dass die Massenverteilung der SiO₂-Partikel deutlich verändert wird, wird vorzugsweise die Breite der Brennerflamme - senkrecht zur Träger-Längsachse gesehen- verändert.

Bei einem örtlich variablen elektrischen Feld sind diese, den Wendepunkten der Brennerbewegung zugeordneten Maßnahmen unabhängig davon, ob die Wendepunkte während der Abscheidung örtlich konstant gehalten oder über die Länge des Rohlings variiert werden.

Es wird eine Verfahrensweise bevorzugt, bei der das Abscheiden der SiO₂-Partikel mittels mehrerer, in Richtung der Träger-Längsachse gesehen voneinander beabstandeter Abscheidebrenner erfolgt, die in vorgegebenem Bewegungsablauf synchron entlang des sich bildenden Rohlings zwischen Wendepunkten hin- und herbewegt werden, wobei die geometrische Form der jeweiligen Brennerflammen in Abhängigkeit von der Position des Abscheidebrenners beim Bewegungsablauf durch das elektrische Feld synchron verändert wird.

Die Abscheidebrenner zeigen hierbei den gleichen Bewegungsablauf entlang des Rohlings. Die Strecke zwischen den Wendepunkten der Brennerbewegung wird im folgenden als "Bewegungsstrecke" bezeichnet. Die Brennerflammen der Abscheidebrenner werden entlang der "Bewegungsstrecke" durch eine "Feldänderung" synchron beeinflusst und verändert.

Dabei kann jedem der Abscheidebrenner jeweils ein Elektrodenpaar zur Erzeugung des elektrischen Feldes im Bereich der ihm zugeordneten Brennerflamme oder entlang der jeweiligen "Bewegungsstrecke" zugeordnet sein. Es ist aber auch möglich die "Feldänderung" durch ein den Abscheidebrennern gemeinsam zugeordnetes elektrisches Feld zu erzeugen, wobei in dem Fall die Feldlinien vorzugsweise senkrecht zur Träger-Längsachse und zur Hauptausbreitungsrichtung der Brennerflammen verlaufen.

Bevorzugt wird eine Verfahrensweise, bei welcher mehrere, den Brennerflammen zugeordnete elektrische Felder in einem mit dem Bewegungsablauf der Abscheidebrenner korrelierten Änderungszyklus synchron variiert werden. Im einfachsten und daher bevorzugten Fall ist jeder Brennerflamme ein separates elektrisches Feld zugeordnet. Da die "Feldänderung" synchron erfolgt, ist der Regelaufwand gering. Die "Feldänderung" kann stufenweise oder kontinuierlich erfolgen. Unabhängig von der synchronisierten "Feldänderung" in Abhängigkeit von der Position der Abscheidebrenner lässt sich die Brennerflamme jedes Abscheidebrenners durch das auf ihn einwirkende elektrische Feld individuell einstellen, so dass beispielsweise unterschiedliche Abscheidecharakteristiken der Abscheidebrenner aufgrund konstruktive Unterschiede kompensiert werden können.

Die Änderungszyklen benachbarter elektrischen Felder sind im einfachsten Fall phasengleich. Es hat sich aber auch als vorteilhaft erweisen, wenn die Änderungszyklen benachbarter elektrischer Felder phasenverschoben, vorzugsweise gegenphasig sind. Bei gegenphasigen Änderungszyklen zeigt beispielsweise einer der Abscheidebrenner eine vergleichsweise schmale Brennerflamme, die eine hohe Oberflächentemperatur erzeugt, während gleichzeitig die beiden benachbarten Abscheidebrenner eine vergleichsweise breite Brennerflamme aufweisen und damit eine dementsprechend niedrigere Oberflächentemperatur erzeugen. Dadurch lassen sich Temperaturspitzen wirksam vermeiden und axiale Dichteschwankungen - insbesondere im Bereich der Wendepunkte - minimieren.

Es hat sich als vorteilhaft erwiesen, das elektrische Feld derart einzustellen, dass eine plötzliche Gasentladung vermieden wird. Erfindungsgemäß beeinflusst das elektrische Feld in erster Linie die geometrische Form der Brennerflamme, jedoch nicht die Bildung der SiO₂- oder Dotierstoff-Partikel. Eine plötzliche Gasentladung, etwa in Form einer Bogen- oder Glimmentladung oder in Form eines Funkens, kann Inhomogenitäten im Abscheidevorgang erzeugen und wird daher möglichst vermieden.

Hinsichtlich der Vorrichtung wird die oben angegebene Aufgabe ausgehend von der eingangs beschriebenen Vorrichtung erfindungsgemäß dadurch gelöst, dass das elektrische Feld entlang der Bewegungsstrecke gesehen örtlich inhomogen ist oder zeitlich - während des Bewegungsablaufs des Abscheidebrenners - in Abhängigkeit von der Position des Abscheidebrenners veränderbar ist.

Die erfindungsgemäße Vorrichtung gibt beim Bewegungsablauf des Abscheidebrenners eine "Feldänderung" im Sinne des oben erläuterten Verfahrens vor, durch die die Geometrie der Brennerflamme beeinflusst wird. Dies erfolgt entweder durch ein zeitlich konstantes elektrisches Feld, das entlang der "Bewegungsstrecke" des Abscheidebrenners inhomogen ist, oder durch ein zeitlich variables elektrisches Feld, das beim Bewegungsablauf in Abhängigkeit von der Position des Abscheidebrenners veränderbar ist.

Mittels der erfindungsgemäßen Vorrichtung ist es möglich, jeder Position des Abscheidebrenners eine bestimmte Wirkung des elektrischen Feldes und damit eine charakteristische Brennerflamme zuordnen. Dadurch läßt sich eine vorgegebene axiale oder radiale Dichte- und Masserverteilung im Rohling gezielt einstellen.

Hinsichtlich der Erzeugung und Wirkung des elektrischen Feldes auf die Brennerflamme wird auf die obigen Erläuterungen zum erfindungsgemäßen Verfahren hingewiesen. Mittels der erfindungsgemäßen Vorrichtung ist ein Rohling mit vorgegebener Dichte- und Masserverteilung bei vergleichsweise geringem Steuerungs- und Regelungsaufwand herstellbar.

Vorzugsweise ist das Elektrodenpaar seitlich zur Brennerflamme angeordnet. Die Elektroden sind sich gegenüberliegend um die Brennerflamme angeordnet, so dass die Feldlinien innerhalb der Brennerflamme im wesentlichen senkrecht zur Ausbreitungsrichtung der Flamme verlaufen. In bevorzugten Spezialfällen ist das Elektrodenpaar seitlich zur Brennerflamme angeordnet - und zwar in Richtung der Träger-Längsachse gesehen oder senkrecht dazu. Im erstgenannten Fall liegen sich die Elektroden so gegenüber, dass die elektrische Feldlinien in einer Richtung parallel zur Träger-Längsachse verlaufen, so dass sich durch das elektrisches Feld eine Verbreiterung der Brennerflamme in Richtung der Längsachse des Substrats ergibt. Im letztgenannten Fall liegen sich die Elektroden hingegen so gegenüber, dass die elektrische Feldlinien in einer Richtung senkrecht zur Träger-Längsachse verlaufen, so dass sich durch das elektrisches Feld eine Verbreiterung der Brennerflamme senkrecht zur Längsachse des Substrats ergibt.

Es hat sich besonders bewährt, das Elektrodenpaar aus Plattenelektroden auszubilden, die im unteren Bereich der Brennerflamme angeordnet sind. Die Flachseiten der Platten verlaufen dabei parallel zur Hauptausbreitungsrichtung der Brennerflamme. Hierdurch lässt sich ein über eine längere Strecke homogenes elektrisches Feld erzeugen. Da ionisierte Teilchen im unteren Bereich der Brennerflamme in höherer Konzentration vorkommen als im oberen Bereich, ergibt die Anordnung der Elektroden in diesem Bereich der Brennerflamme einen höheren Wirkungsgrad hinsichtlich der "Feldänderung".

Zweckmäßigerweise sind die Spannungsquelle und die Antriebsvorrichtung mit einer Regelvorrichtung verbunden, mittels der das elektrische Feld veränderbar und in Abhängigkeit von der Position des Abscheidebrenners bei seinem Bewegungsablauf im Bereich der Brennerflamme einstellbar ist.

Durch die Regelvorrichtung wird der Bewegungsablauf des Abscheidebrenners entlang der Oberfläche des sich bildenden Rohlings vorgegeben. Die Position des Abscheidebrenners ist daher stets bestimmbar. Die Spannungsquelle ist mit der Regeleinrichtung verbunden. Mittels der Regeleinrichtung lässt sich durch Änderung des elektrischen Feldes somit für jede Position des Abscheidebrenners eine charakteristische Brennerflamme zuordnen. Eine Veränderung der Feldstärke oder eine Änderung der Richtung der Feldlinien wirken sich auf die Brennerflamme, und insbesondere auf deren Geometrie oder Temperatur, aus. Dadurch läßt sich eine vorgegebene axiale oder radiale Dichte- und Masserverteilung im Rohling gezielt einstellen.

Die Regeleinrichtung korreliert die Einstellung des elektrischen Feldes und damit die Eigenschaft der Brennerflamme mit dem Bewegungsablauf des Abscheidebrenners. Dadurch ist ein Rohling mit vorgegebener Dichte- und Masserverteilung bei vergleichsweise geringem Steuerungs- und Regelungsaufwand herstellbar.

Bei einer besonders bevorzugten Ausgestaltung der erfindungsgemäßen Vorrichtung ist eine Vielzahl voneinander beabstandeter und mit der Antriebsvorrichtung verbundener Abscheidebrenner vorgesehen, die entlang des Trägers in einem vorgegebenen Bewegungsablauf zwischen Wendepunkten synchron hin- und herbewegbar sind. Alle Abscheidebrenner zeigen hierbei den gleichen Bewegungsablauf entlang des Rohlings. Mittels der Regeleinrichtung werden die Brennerflammen der Abscheidebrenner jeweils positionsabhängig anhand eines auf sie einwirkenden elektrischen Feldes eingestellt. Dadurch lassen sich die Temperaturen aller Brennerflammen abhängig von der Position des jeweiligen Abscheidebrenners einstellen. Auf eine axiale Variation der Wendepunkte kann verzichtet werden kann. Daher ist der apparative Aufwand im Vergleich zu der eingangs beschriebenen, aus dem Stand der Technik bekannten Vorrichtung gering.

Es hat sich als günstig erwiesen, jedem Abscheidebrenner jeweils ein Elektrodenpaar zur Erzeugung des elektrischen Feldes im Bereich der ihm zugeordneten Brennerflamme zuzuordnen. Dadurch lässt sich das elektrisches Feld in der unmittelbaren Nähe der jeweiligen Brennerflamme erzeugen. Die Elektroden des Elektrodenpaars sind dabei vorzugsweise seitlich zur Brennerflamme angeordnet, so dass die Feldlinien die jeweilige Brennerflamme im wesentlichen senkrecht zu deren Ausbreitungsrichtung schneiden. Die Feldlinien können dabei senkrecht - vorzugsweise jedoch parallel - zur Längsachse des Trägers verlaufen, oder in jedem beliebigen Zwischenwinkel.

In einer alternativen und gleichermaßen bevorzugten Ausführungsform sind die Abscheidebrenner in mindestens einer parallel zur Längsachse des Trägers verlaufenden Brennerreihe angeordnet sind, wobei beidseitig und parallel zur Brennerreihe das Elektrodenpaar zur Erzeugung des elektrischen Feldes vorgesehen ist. Für die Erzeugung des elektrischen Feldes für die gesamte Brennerreihe ist lediglich ein Elektrodenpaar erforderlich. Die Elektroden erstrecken sich vorzugsweise parallel zur Träger-Längsachse, so dass die Feldlinien des elektrischen Feldes senkrecht zur Träger-Längsachse verlaufen und sich bei einer "Feldänderung" die Abmessung der Brennerflamme ebenfalls in dieser Richtung verändert.

Nachfolgend wird die Erfindung anhand von Ausführungsbeispielen und einer Zeichnung näher erläutert. In der Zeichnung zeigen in schematischer Darstellung im einzelnen:
- **Figur 1**:: eine Ausführungsform der erfindungsgemäßen Vorrichtung zur Durchführung des erfindungsgemäßen Verfahrens in einer Seitenansicht,
- **Figur 2**:: ein Diagramm zum Verlauf der Feldstärke eines elektrischen Feldes im Bereich einer Brennerflamme als Funktion der Position eines Abscheidebrenners im Bereich zwischen zwei Wendepunkten A und B,
- **Figur 3**:: ein Diagramm zum Bewegungsablauf (axiale Position) eines Abscheidebrenners und dem Durchmesser der Brennerflamme als Funktion der Zeit,
- **Figur 4a**:: ein Diagramm zum Flammendurchmesser als Funktion der Zeit bei einer Betriebsweise mit gegenläufiger Änderungsphase benachbarter Abscheidebrenner, und
- **Figur 4b**:: eine Brennerreihe bei einer Betriebsweise gemäß Figur 4a.

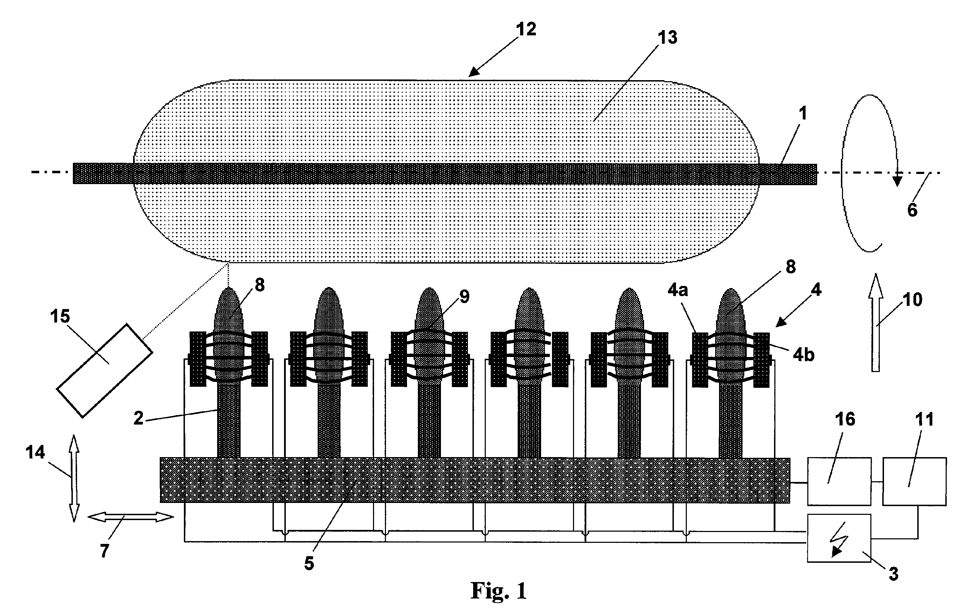

Bei der in **Figur 1** dargestellten Vorrichtung ist ein Trägerrohr 1 aus Aluminiumoxid vorgesehen, entlang dem eine Vielzahl in einer Reihe angeordneter Flammhydrolyse-Brenner 2 angeordnet sind. Die Flammhydrolyse-Brenner 2 sind auf einem gemeinsamen Brennerblock 5 montiert, der parallel zur Längsachse 6 des Trägerrohrs 1 hin- und herbewegbar und senkrecht dazu verschiebbar ist, wie dies die Richtungspfeile 7 und 14 andeuten. Der Brennerblock 5 ist geerdet. Die Brenner 2 bestehen aus Quarzglas; ihr Abstand zueinander beträgt 15 cm.

Den Brennern 2 ist jeweils ein Elektrodenpaar 4, bestehend aus zwei sich paarweise gegenüberliegenden Plattenelektroden 4a, 4b zugeordnet, die jeweils mit einem Pol einer Hochspannungsquelle 3 verbunden sind. Die Plattenelektroden 4a, 4b sind auf dem Brennerblock 5 montiert und synchron mit den Brennern 2 bewegbar. Die Ebenen der Flachseiten der Plattenelektroden 4a, 4b verlaufen senkrecht zur Längsachse 6 des Trägerrohrs 1, wobei sie die Brennerflamme 8 des jeweiligen Brenners 2 teilweise zwischen sich einschließen. Mittels der Plattenelektroden 4a, 4b kann im Bereich der Brennerflamme 8 ein elektrisches Feld 9 erzeugt werden, das in Figur 1 durch Feldlinien symbolisiert ist. Die Feldlinien verlaufen im wesentlichen senkrecht zur Hauptausbreitungsrichtung 10 der Brennerflammen 8 und parallel zur Längsachse 6 des Trägerrohrs 1.

Für die Regelung der Bewegung des Brennerblocks 5 und für die Einstellung der Feldstärke des elektrisches Feldes 9 ist eine Regeleinrichtung 11 vorgesehen, die mit dem Antrieb 16 für den Brennerblock 5 und mit der Hochspannungsquelle 3 verbunden ist.

Mittels der Brenner 2 werden auf dem um seine Längsachse 6 rotierenden Trägerrohr 1 SiO₂-Partikel abgeschieden, so dass schichtweise der Rohling 13 aufgebaut wird. Hierzu wird der Brennerblock 5 entlang der Längsachse 6 des Trägerrohrs 1 zwischen zwei, in Bezug auf die Längsachse 6 ortsfesten Wendepunkten hin- und herbewegt. Die Amplitude der Hin- und Herbewegung ist mittels des Richtungspfeils 7 charakterisiert. Sie beträgt 15 cm und entspricht damit dem axialen Abstand der Brenner 2 voneinander.

Den Brennern 2 werden jeweils als Brennergase Sauerstoff und Wasserstoff und als Ausgangsmaterial für die Bildung der SiO₂-Partikel gasförmiges SiCl₄ zugeführt. Im Fall einer Dotierung wird den Brennern 2 zusätzlich eine Ausgangssubstanz zur Bildung des Dotierstoffs, wie GeCl₄ zur Bildung von GeO₂, zugeführt.

Die Temperatur der Rohlingoberfläche 12 wird kontinuierlich gemessen. Hierzu ist eine Thermokamera 15 auf die Rohlingoberfläche 12 im Auftreffpunkt der Brennerflamme 8 gerichtet. Die Thermokamera 15 ist ebenfalls mit dem Brennerblock 5 verbunden und wird mit diesem hin- und herbewegt.

Während des Abscheideprozesses wird der Abstand zwischen dem Brennerblock 5 und der Rohlingoberfläche 12 konstant gehalten, indem der Brennerblock 5 in Richtung des Richtungspfeils 14 entsprechend verschoben wird.

Die Brennerflammen 8 der Abscheidebrenner 2 werden in Abhängigkeit von der Position der Brenner 2 synchron aufgeweitet und verengt, indem die Feldstärke des elektrischen Feldes 9 im Bereich der Brennerflammen 8 mittels der Regeleinrichtung 11 verändert wird. Hierzu wird die mittels der Hochspannungsquelle 3 die an den Plattenelektroden 4 anliegende Spannung entsprechend verändert, ohne dass es zu einer Gasentladung kommt.

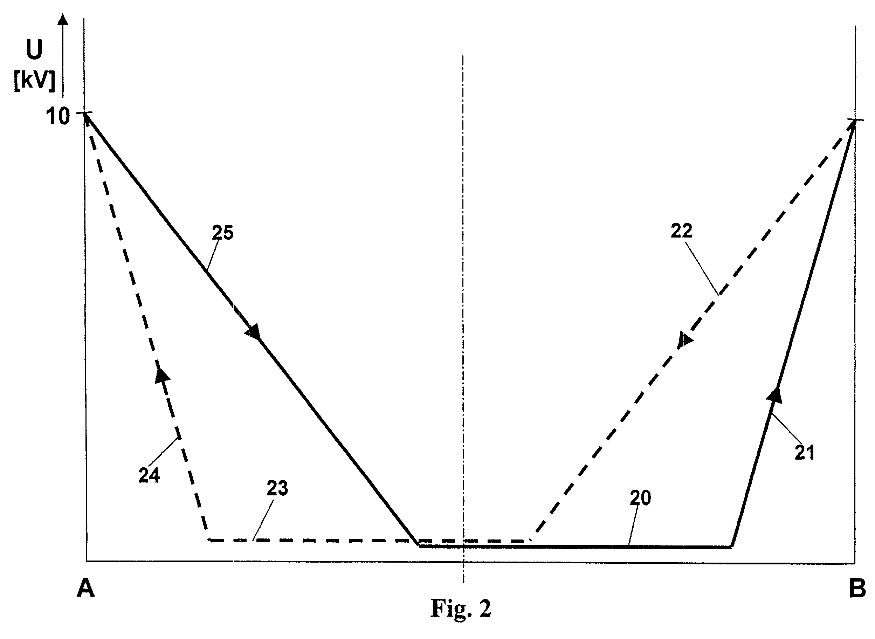

Nachfolgend werden Ausführungsbeispiele für das erfindungsgemäße Verfahren anhand **Figur 2** und der Vorrichtung gemäß Figur 1 erläutert.

Bei dem Diagramm der Figur 2 ist der Verlauf der an den Plattenelektroden 4 anliegenden Spannung "U" als Funktion der Position eines Brenners 2 zwischen zwei Wendepunkten A und B dargestellt. Die Spannung "U" ist proportional der Feldstärke des elektrischen Feldes 9 im Bereich der jeweiligen Brennerflamme, wobei mit der Spannung eine Aufweitung der Brennerflamme einhergeht.

Der eingezeichneten Verlauf ist mit Richtungspfeilen versehen, die die jeweilige Richtung der Brennerblockbewegung angeben.

Der Kurvenabschnitt, der die Spannung "U" bei der Hinbewegung des Brennerblocks zu dem Wendepunkt B repräsentiert ist durch eine durchgezogene Linie, und der Kurvenverlauf bei der Zurückbewegung des Brennerblocks vom Wendepunkt B zum Wendepunkt A durch eine gestrichelte Linie gekennzeichnet.

Die Spannung "U" (und damit die elektrische Feldstärke im Bereich der Brennerflammen) wird anhand eines Programms mittels der Regelvorrichtung 11 in Abhängigkeit von der Position der Brenner 2 gesteuert. Beginnend in der Mitte zwischen den beiden Wendepunkten A und B (bei der Hinbewegung des Brennerblocks 5 in Richtung auf den Wendepunkt B) wird die Spannung "U" über eine Strecke von etwa 3,5 cm auf Null gehalten (Kurvenabschnitt 20) und ab ca. 3 cm vor dem Wendepunkt B in einem Übergangsbereich 21 von ca. 3 cm Länge kontinuierlich bis auf ihren Maximalwert von 10 kV erhöht (Kurvenabschnitt 21), der im Wendepunkt B erreicht wird.

Bei der Wegbewegung des Brennerblocks 5 vom Wendepunkt B wird die Spannung "U" kontinuierlich wieder auf Null verringert (Kurvenabschnitt 22), wobei dieser Wert ca. 8 cm vor dem Wendepunkt A erreicht und über eine Distanz von 5 cm auf Null gehalten wird (Kurvenabschnitt 23), bevor sie bei einem Abstand von ca. 3 cm vor dem Wendepunkt A in einem Übergangsbereich 25 von ca. 3 cm Länge kontinuierlich bis auf ihren Maximalwert von 10 kV erhöht wird (Kurvenabschnitt 24), der im Wendepunkt A erreicht wird. Anschließend wird die Spannung kontinuierlich wieder auf Null abgesenkt (Kurvenabschnitt 25). Der in Figur 2 dargestellte Spannungsverlauf wird ständig wiederholt und während des gesamten Abscheideprozesses beibehalten.

Beim Anlegen der Spannung "U" wird im Bereich der Brennerflammen 8 ein elektrisches Feld erzeugt, dessen Feldstärke beim Erhöhen der Spannung zunimmt. Dadurch wird die Brennerflamme 8 in Richtung der Längsachse 6 des Trägerrohres 1 verbreitert und die Flammentemperatur verringert. Dadurch wird das Überhitzen des Rohlings 13 aufgrund des doppelten Aufheizens durch die Hin- und Herbewegung im Bereich der Wendepunkte A,B gering gehalten, so dass auf der Rohlingoberfläche 12 während des Abscheideprozesses eine im wesentlichen konstante Oberflächentemperatur gemessen wird.

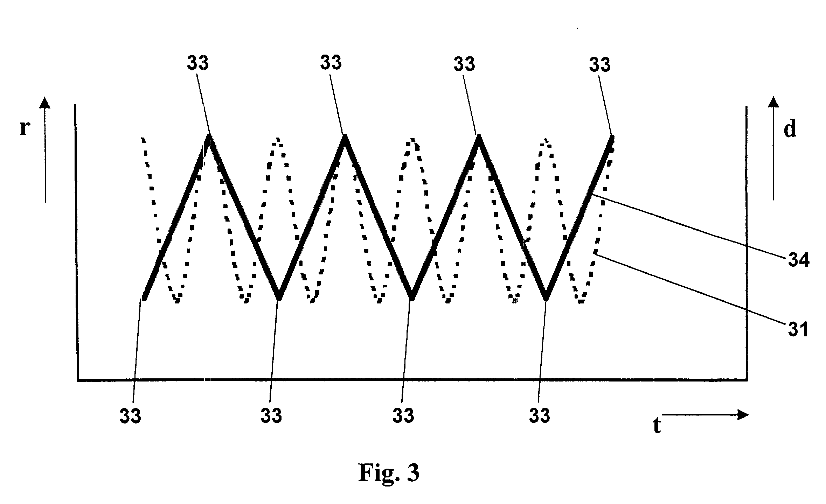

Im Diagramm gemäß **Figur 3** ist ein anderes Ausführungsbeispiel für eine erfindungsgemäße Variation der Brennerflamme 8 in Abhängigkeit von der axiale Position "r" eines Abscheidebrenners dargestellt. Der Durchmesser "d" der Brennerflamme (in relativen Einheiten) ist als Funktion der Zeit "t" (in relativen Einheiten) aufgetragen. Die Position "r" ergibt sich durch den Bewegungsablauf 31 des Abscheidebrenners beim Abscheidevorgang, der durch die durchgezogene Zick-Zacklinie symbolisiert wird. Daraus ergibt sich, dass der Abscheidebrenner zwischen zwei örtlich festen Wendepunkten 32 und 33 mit konstanter Geschwindigkeit hin- und herbewegt wird.

Dem Bewegungsablauf 31 ist eine sinusförmige Kurve 34 überlagert, die den Verlauf des Durchmessers "d" der Brennerflamme über der Zeit "t" anzeigt. Daraus ist ersichtlich, dass "d" jeweils im Bereich der Wendepunkte 33, 34 einen Maximalwert und in der Mitte zwischen den Wendepunkten 33, 34 jeweils einen Minimalwert einnimmt. Der Durchmesser der Brennerflamme wird durch Variation des elektrischen Feldes mittels der in Figur 1 gezeigten Vorrichtung verändert. Durch Vergrößeren der Feldstärke eines elektrischen Feldes wird die Brennerflamme kontinuierlich in erster Linie in Richtung der Feldlinien aufgeweitet. Dadurch ergibt sich eine Verformung der Brennerflamme in Richtung eines Ovals (im Querschnitt gesehen). Als Durchmessers der Brennerflamme wird in diesem Fall die Länge der langen Oval-Hauptachse angesehen.

Durch die Wirkung des elektrischen Feldes wird der Durchmesser der Brennerflamme in Abhängigkeit von der Position des Abscheidebrenners während seines Bewegungsablaufs verändert. Lokale Temperaturspitzen im Bereich der Wendepunkte werden kompensiert, indem dort der Durchmesser "d" der Brennerflamme durch die Wirkung des elektrischen Feldes vergrößert wird.

In dem in **Figur 4a** gezeigten Diagramm sind die Änderungszyklen der Durchmesser "d" zweier benachbarter Brennerflammen (in relativen Einheiten) einer Brennerreihe als Funktion der Zeit "t" dargestellt. Dem Änderungszyklus der ersten Brennerflamme ist die durchgezogene Linie 41, dem Änderungszyklus der zweiten Brennerflamme die punktierte Linie 42 zugeordnet. Die Zeit zum Durchlaufen eines Änderungszyklus (Maximum bis Maximum) entspricht der Dauer eines Bewegungsablaufs der Brennerbewegung von einem Wendepunkt zum anderen.

Bei dem in Figur 4a dargestellten Ausführungsbeispiel sind die Änderungszyklen der benachbarten Brennerflammen und somit der entsprechend auf sie einwirkenden elektrischen Felder gegenphasig verschoben. Daher zeigt der eine Abscheidebrenner eine vergleichsweise schmale Brennerflamme, die eine hohe Oberflächentemperatur erzeugt, während gleichzeitig der benachbarte Abscheidebrenner eine vergleichsweise breite Brennerflamme aufweist, die eine dementsprechend niedrigere Oberflächentemperatur erzeugt.

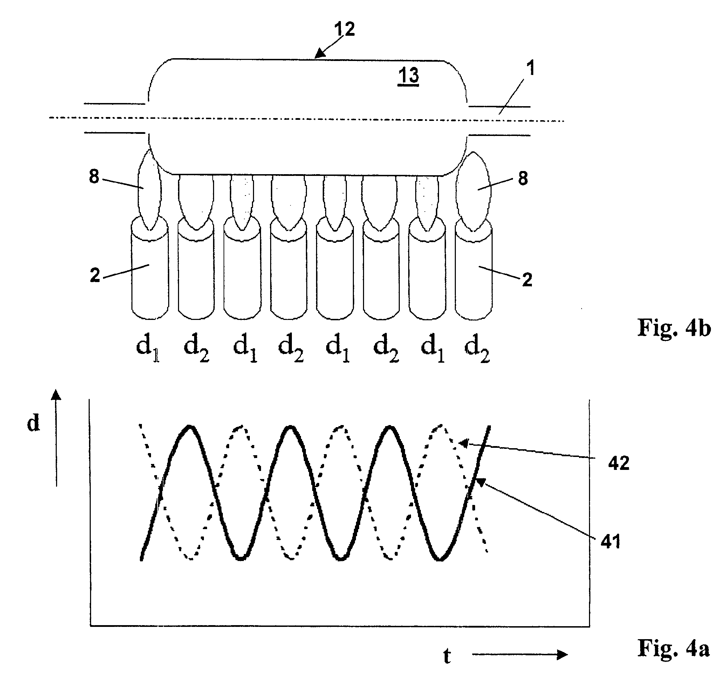

Dies verdeutlicht die schematische Darstellung der Brennerreihe gemäß **Figur 4b.** Aufgrund der gegenphasigen "Feldänderung" zeigen die Abscheidebrenner 2 der gesamten Brennerreihe wechselweise eine Brennerflamme 8 mit kleinem Durchmesser (d₁) und mit großem Durchmesser (d₂). Die "Feldänderung" erfolgt synchron für jeweils beide Hälften der Abscheidebrenner 2.

Bei dieser Betriebsweise ist stets eine vergleichsweise schmälere und damit heißere Brennerflamme von zwei vergleichsweise breiteren und damit kälteren Brennerflammen umgeben. Temperaturspitzen auf der Rohlingoberfläche 12 lassen sich so minimieren.

## Patentansprüche

1. Verfahren für die Herstellung eines SiO₂-Rohlings, indem SiO₂-Partikel in einer einem Abscheidebrenner zugeordneten Brennerflamme gebildet und unter Einwirkung eines elektrischen Feldes auf einer Ablagerungsfläche eines um seine Längsachse rotierenden Trägers abgeschieden werden, wobei der mindestens eine Abscheidebrenner in einem vorgegebenen Bewegungsablauf, entlang des sich bildenden Rohlings zwischen Wendepunkten hin- und herbewegt wird, **dadurch gekennzeichnet, dass** die geometrische Form der Brennerflamme in Abhängigkeit von der Position des Abscheidebrenners beim Bewegungsablauf durch das elektrische Feld verändert wird.

2. Verfahren nach Anspruch 1, **dadurch gekennzeichnet, dass** die Breite der Brennerflamme - in Richtung der Träger-Längsachse gesehen - in Abhängigkeit von der Position des Abscheidebrenners beim Bewegungsablauf verändert wird.

3. Verfahren nach Anspruch 1, **dadurch gekennzeichnet, dass** die Breite der Brennerflamme - senkrecht zur Träger-Längsachse gesehen - in Abhängigkeit von der Position des Abscheidebrenners beim Bewegungsablauf verändert wird.

4. Verfahren nach einem der Ansprüche 1 bis 3, **dadurch gekennzeichnet, dass** bei einer Position des Abscheidebrenners im Bereich der Wendepunkte die Breite der Brennerflamme mittels des elektrischen Feldes verändert wird.

5. Verfahren nach einem der vorhergehenden Ansprüche, **dadurch gekennzeichnet, dass** mehrere, in Richtung der Träger-Längsachse gesehen voneinander beabstandete Abscheidebrenner eingesetzt werden, die in vorgegebenem Bewegungsablauf synchron entlang des sich bildenden Rohlings zwischen Wendepunkten hin- und herbewegt werden, wobei die geometrische Form der jeweiligen Brennerflammen in Abhängigkeit von der Position der Abscheidebrenner beim Bewegungsablauf durch das elektrische Feld synchron verändert wird.

6. Verfahren nach Anspruch 5, **dadurch gekennzeichnet, dass** mehrere, den Brennerflammen zugeordnete elektrische Felder in einem mit dem Bewegungsablauf der Abscheidebrenner korrelierten Änderungszyklus synchron variiert werden.

7. Verfahren nach Anspruch 6, **dadurch gekennzeichnet, dass** die Änderungszyklen benachbarter elektrischen Felder phasengleich sind.

8. Verfahren nach Anspruch 7, **dadurch gekennzeichnet, dass** die Änderungszyklen benachbarter elektrischen Felder phasenverschoben sind

9. Verfahren nach Anspruch 8, **dadurch gekennzeichnet, dass** die Änderungszyklen benachbarter elektrischen Felder gegenphasig sind

10. Verfahren nach einem der vorhergehenden Ansprüche, **dadurch gekennzeichnet, dass** das elektrische Feld derart eingestellt wird, dass eine Gasentladung vermieden wird.

11. Vorrichtung zur Herstellung eines SiO₂-Rohlings, mit einem um seine Längsachse rotierbaren Träger, mit mindestens einem Abscheidebrenner zur Erzeugung von SiO₂-Partikeln in einer dem Abscheidebrenner zugeordneten Brennerflamme, mit einer Antriebsvorrichtung, mittels der der Abscheidebrenner entlang des Trägers in einem vorgegebenen Bewegungsablauf entlang des sich bildenden Rohlings über eine Bewegungsstrecke zwischen Wendepunkten hin- und herbewegbar ist, und mit einem Elektrodenpaar, das mit einer Spannungsquelle verbunden, zur Erzeugung eines im Bereich der Brennerflamme wirkenden elektrischen Feldes dient, **dadurch gekennzeichnet, dass** das elektrische Feld entlang der Bewegungsstrecke gesehen örtlich inhomogen ist oder zeitlich - während des Bewegungsablaufs des Abscheidebrenners - in Abhängigkeit von der Position des Abscheidebrenners veränderbar ist.

12. Vorrichtung nach Anspruch 11, **dadurch gekennzeichnet, dass** das Elektrodenpaar seitlich zur Brennerflamme - in Richtung der Träger-Längsachse gesehen - angeordnet ist.

13. Vorrichtung nach Anspruch 12, **dadurch gekennzeichnet, dass** das Elektrodenpaar seitlich zur Brennerflamme - senkrecht zur Träger-Längsachse gesehen - angeordnet ist.

14. Vorrichtung nach Anspruch 12 oder 13, **dadurch gekennzeichnet, dass** das Elektrodenpaar aus Plattenelektroden gebildet wird, die im unteren Bereich der Brennerflamme angeordnet sind.

15. Vorrichtung nach einem der Ansprüche 11 bis 14, **dadurch gekennzeichnet, dass** die Spannungsquelle und die Antriebsvorrichtung mit einer Regelvorrichtung verbunden sind, mittels der das elektrische Feld veränderbar und in Abhängigkeit von der Position des Abscheidebrenners bei seinem Bewegungsablauf im Bereich der Brennerflamme einstellbar ist.

16. Vorrichtung nach einem der Ansprüche 11 bis 15, **dadurch gekennzeichnet, dass** eine Vielzahl voneinander beabstandeter und mit der Antriebsvorrichtung verbundener Abscheidebrenner vorgesehen sind, die entlang des Trägers in einem vorgegebenen Bewegungsablauf zwischen Wendepunkten synchron hin- und herbewegbar sind, und dass jedem Abscheidebrenner jeweils ein Elektrodenpaar zur Erzeugung des elektrischen Feldes im Bereich der ihm zugeordneten Brennerflamme zugeordnet ist.

17. Vorrichtung nach einem der Ansprüche 11 bis 15, **dadurch gekennzeichnet, dass** die Abscheidebrenner in mindestens einer parallel zur Längsachse des Trägers verlaufenden Brennerreihe angeordnet sind, wobei beidseitig zur Brennerreihe das Elektrodenpaar zur Erzeugung des elektrischen Feldes vorgesehen ist.
